# EUROPEAN PATENT APPLICATION

(11) **EP 3 915 847 A1**
(43) Date of publication of application: **01.12.2021**
(21) Application number: 21160825.2
(22) Date of filing: 04.03.2021
(51) Int. Cl.: B60W 10/02, B60W 10/18

(54) **METHOD FOR OPERATING A TRACTOR, IN PARTICULAR METHOD OF AUTOMATICALLY CONTROLLING CLUTCH AND BRAKES OF A TRACTOR, AND TRACTOR IMPLEMENTING THIS METHOD**

(30) Priority: 04.03.2020 IT 202000004579
(71) Applicant: BCS S.p.A., 20123 Milano (IT)
(72) Inventor: MAIOCCHI, Fabio, 20123 MILANO (IT)
(74) Representative: Martini, Gabriele

(57) **Abstract**

A tractor and a method for controlling a clutch device and a braking system of a tractor according to at least one subjective variable/parameter set by the driver and according to at least one objective operating variable/parameter of the tractor, wherein the tractor comprises a chassis, a cabin or a driving position for a driver, a front axle provided with a pair of front wheels , a rear axle provided with a pair of rear wheels or rear tracks, an engine, a clutch device, a selector for the selective engagement of the forward gears and reverse gears or an automatic gear shifting system, an engine drive device that can be set by the user along a scale, a control unit configured to automatically control the clutch device according to a first subjective variable/parameter set by the driver and according to at least one objective operating variable/parameter of the tractor, and wherein the first subjective variable/parameter is the position of the engine drive device and the objective variable/parameter is a physical operating parameter of the tractor continuously measured by a sensor.

## Description

### Cross-reference to related applications

This Patent Application claims priority from Italian Patent Application No. 102020000004579 filed on March 4, 2020.

### Technical field

The technical field of the invention is that of tractors, which, because of their own nature and final use, cannot be compared to cars or other vehicles used for the transportation of people. This is mainly due to the loads involved (for example in the transportation in forklift mode with lifting forks for products harvested in a field), to the power available (for example in order to carry out a towing function for a soil processing equipment) and to the number of gears available (much greater compared to a common car). In particular, the invention relates to a method for operating a tractor, wherein the clutch and the brakes are controlled in an automatic manner. Therefore, as explained more in detail below, the invention not only relates to an industry that is different from the traditional automotive industry, but also implements control logics that go beyond the traditional logics currently implemented in so-called "automatic" cars. Furthermore, the invention relates to a tractor implementing the aforesaid innovative operating method.

The invention preferably finds its most advantageous application in isodiametric tractors, in tractors with front wheels and rear tracks and, more in general, in small-sized tractors. Indeed, during the use of these tractors, the brakes and the clutch need to be operated very often, for example (but not exclusively) during movement reversal operations or when starting uphill. The manual handling by means of brake and clutch pedals during operations for the reversal of the driving direction is particularly critical because of the large mechanical load deriving from the mass of the tractor and from the possible equipment carried by and coupled to the tractor. Furthermore, a tractor is often used as support for a forklift. In this case, many small adjustments of the position of the tractor and of the equipment connected thereto need to be carried out while approaching the products to be lifted. These approaching operations require an experienced driver and are extremely tiring for the driver. The invention also proves to be very advantageous during these phases of use of the tractor.

### State of the art

As it is known, the term tractor indicates a large-sized and heavy vehicle used in agriculture to tow a trailer or to support and move specific equipment for agricultural works, such as a mill of a forklift assembly. Ever since they were born, traditional agricultural tractors have been characterized by the presence of rear wheels that are much larger than the front ones. This particular shape is due to the fact that the towing force is mainly exerted by the rear wheels and improves as the mass of the tractor increases. Furthermore, this conformation is historically inspired by the physiognomy of bulls, the ultimate towing animal, which, indeed, has two sturdy rear legs, but thin front legs.

Nowadays, tractors do not carry out any longer the sole function of towing static equipment, but are also provided, at the front and/or at the back, with a power take-off for the coupling of equipment operated in a hydraulic and/or mechanical and/or electric manner, which, by so doing, can directly receive power from the tractor to which it is connected. A piece of equipment that is very often used is the lifting fork assembly, which allows the tractor to operate in "forklift" mode.

The need to operate in very small spaces, such as for example narrow rows of vines, led to the creation of tractors that, on the one hand, are capable of delivering a power that is similar to or can be compared with that of a traditional tractor and, on the other hand, do not take up much space, with small dimensions in terms of height, wheel base and width.

In order to fulfil this need, special tractors are nowadays known, which are commonly called "isodiametric" tractors and have rear wheels with the same diameter as the front wheels. In order to allow these tractors to have a greater stability, grip to the ground and towing force, isodiametric tractors were recently subjected to a further evolution, which involves replacing the rear wheels with tracks.

Both traditional tractors and isodiametric tractors, with or without rear tracks, like all vehicles, need to have a series of gears available and to be able to drive in reverse when they have to. In order to allow for these manoeuvres, as well as in order to allow the tractor to be started when it is standing still, tractors need to be provided with a clutch.

Therefore, each tractor is provided with a clutch, which can be controlled through a system of levers connected to a pedal, which has to be operated by the driver. As it is known, a clutch is a device that allows a mechanical torque to be transmitted from an engine to a motion transmission axle connected to the wheels of the tractor. The clutch consists of a given number of discs divided into two categories: driving discs, which are coupled to the engine of the tractor, and driven discs, which are connected to the transmission side transferring the movement to the wheels. The discs of the clutch are made of a suitable material and, through their pressing, can transmit part of the torque of the engine to the axle of the wheels. The discs of the clutch can also be immersed in oil. The position of the operating pedal of the clutch normally translates into an angular position of a suitable transducer, both mechanical or electromechanical-electronic, which allows a suitable mechanical or electromechanical-electronic management logic to control a suitable actuator, which applies a force to the discs of the clutch. In this embodiment, therefore, the driver controls the torque transmitted to the transmission shaft connected to the wheels through the pedal of the clutch. In particular, during the use of this pedal, the latter is initially pressed up to the end of the travel (so as to cause the detachment of the driven discs from the driving discs) and then it is slowly and progressively released until the movement of the tractor is perceived. At this point, the pedal is further released in order to increase the torque transmitted so as to make up for the frictions that tend to increase with the speed. The position of the pedal (for example, angular position) in which the release movement is operated is located in an operating area of the travel of the pedal whose position along the travel of the pedal and whose width depend on different factors and change as the external conditions (or surrounding conditions) change. The position and the width of the operating area of the clutch pedal are affected, for example, by the load applied to the tractor and by the gear engaged. If the mechanical load increases, this area narrows down and the dynamic available to be able to softly and progressively engage the clutch decreases. Current control logics and clutch linking logics (chain defined by pedal-transducer-actuator) are requested to obtain a soft engagement over a wide range of gears engaged through the gearbox and in the presence of highly variable loads, so as to cover a large number of cases of tractor use. However, the management of the clutch of a tractor through the relative pedal operated by the driver of the vehicle is a hardly solvable problem, since the load to which the tractor is subjected is extremely variable. Indeed, the gear ratio set by the user upon starting the vehicle is not clearly defined and, anyway, can change over the course of operations and, furthermore, the tractor can work with significantly different towed loads and on smaller or bigger slopes. When the load increases, the position of the pedal in whose neighbourhood the engagement of the clutch takes place moves upwards and, as a consequence, the possibility of adjustment through the clutch pedal changes.

Starting from this scenario, there currently are two countering needs in the control of the clutch. The first one requires a soft engagement for any load applied and, hence, a very slow movement of the pedal; the second one, on the other hand, requires a quick engagement for time reasons and in order to limit the wear of the discs of the clutch. Control systems can be built, which define a relation between the position of the pedal and the torque transmitted to the wheels. In this way, after having fixed the position of the pedal, the acceleration of the vehicle and, hence, the dynamic of the system can be adjusted. Though, these systems show a position of the pedal during the engagement which strongly depends on the load applied and, furthermore, a quick release of the clutch would produce anyway an unpleasant effect. Furthermore, these systems are often managed with sole PID (proportional, integral, derivative) controls, which leave the progressiveness of the engagement of the clutch to users; hence, this manoeuvre highly depends on operators through the personal use of the pedal. Operators can act upon the pedal more or less quickly, thus determining more or less sudden engagements, which further depend on the operating conditions surrounding the vehicle. Moreover, an accidental release of the clutch pedal is possible, which would cause a violent tug of the transmission and even the turning off of the tractor. The timely development of the pressure exerted upon the discs of the clutch during the engagement thereof strongly depends on the ability of the operator to manoeuvre the clutch pedal in the most appropriate manner in relation to the condition in which the tractor operates.

Furthermore, it is necessary to take into account the struggle deriving from the prolonged and continue use of the clutch or brake pedal.

In current tractors, the position of the pedal normally is immediately translated into a transmitted torque and the operator's ability is crucial in order to have a soft engagement which also respects the friction material of the clutch discs. Often there are particularly long clutch engagements or quick releases of the pedal, which produce a premature wear of the discs of the clutch or sudden starting episodes. Furthermore, gear shifts can turn out to be too violent or too long, once again because everything is too strictly related to the way in which the operator moves the clutch pedal. The achievement of a soft and quick engagement is crucial both in terms of driving comfort and in terms of duration of the clutch. Indeed, a particularly rough clutch leads operators to take their time with engaging it, with a consequent increase in the wear of the friction discs. Operators, while engaging the clutch and, hence, moving the tractor, after a first search for the disc contact point (also called *"kissing point",* which is the point where the tractor starts moving), operate with a slower movement in order to obtain a comfortable starting and a controlled acceleration. Therefore, the decisive element is the current position of the clutch pedal after the kissing point, which does not move much when the acceleration of the vehicle takes place, whereas it would be best to entrust an automatic system with the way in which the pressure changes from the moment in which the pedal moves to the achievement of the pressure corresponding to the current position of the clutch pedal and defined by the static curve graphically representing the equation P = P(0), wherein θ is the position of the pedal and P is the pressure exerted between the discs of the clutch. The static features that can be implemented and selected in the system can be different and their selection can depend on subjective and objective parameters.

A further critical factor, which multiplies by n-times the problems discussed above, is the fact that, during a work session, drivers must act upon the clutch pedal many times and this action, repeated over time, causes both physical and mental struggles, which facilitate an incorrect execution of the manoeuvre, both with mechanical consequences for the components involved and in terms of danger for drivers themselves.

In particular, the clutch can be subjected to significant damages and operators can suffer from exhaustion when the tractor has to precisely approach products many times in a day, which is what happens when using the forklift: under these operating conditions, the brake pedal, the clutch pedal and the accelerator pedal are all used.

Starting from this scenario, the Applicant developed an automatic control (and, hence, operating) logic for the clutch or the brakes, leaving to drivers the sole operation of the accelerator pedal. In the automotive industry, these logics are implemented din the so-called "automatic" cars, which, indeed, lack the clutch pedal. However, as explained more in detail below, on the one hand, the tractor according to the invention does not exclude the presence of the clutch pedal in order to leave anyway to drivers the possibility of acting in this regard nor there is a simple transposition of the logics of "automatic" cars to the tractor. Indeed, the conditions in which a tractor can end up operating can be very different and have variables that are very distant from one another, to such an extent that the logics used in "automatic" cars are not capable of making a tractor capable of operating. Automatic clutch control logics used in "automatic" cars allow the torque transmitted to the wheels to be modulated by acting upon the angular position of the accelerator pedal and, hence, leave to drivers the burden of actuating the right command based on the state of the car and of the environment where it operates. No further parameter is taken into consideration simply because cars are substantially operated always in the same conditions.

### Description of the invention

Starting from this prior art, the object of the invention is to provide a tractor capable of overcoming the drawbacks of the state of the art in an extremely simple and particularly functional manner.

In particular, the object of the invention is to provide an innovative method for operating or automatically controlling the clutch of a tractor, which is particularly useful when starting uphill and/or reversing the driving direction and, furthermore, also when drivers have to precisely approach products, which is what happens, for example, when the tractor operates in forklift mode.

This system allows drivers to carry out very small adjustments of the position of the tractor and of the equipment connected thereto by only using the accelerator pedal or, at the end of the precision approaching, a resolute and always controlled starting can be requested, always through the accelerator pedal. Precise approaching and quick, though comfortable starting, since it is controlled in its acceleration, make the system ideal for a forklift use, without necessarily having to use hydraulic/mechanical technologies (hydrostatic tractor) or hybrid technologies (with the use of heat engines coupled to electric motors).

The method according to the invention allows multiple advantages to be reached, such as:
- avoiding a violent engagement and, hence, a tug of the transmission, even in case of an improper operation of the accelerator pedal;
- preventing the engine from turning off in case of a quick and total release of the accelerator pedal;
- assisting operators in the engagement of the clutch and/or of the brakes so as to take into consideration the mechanical load to which the tractor is subjected due to the slope of the driving path in order to always obtain a wide adjustment dynamic and, hence, a soft and progressive engagement of the clutch and of the brakes, even with a sudden pressing or a quick release of the accelerator pedal;
- assisting operators in the engagement of the clutch and/or of the brakes so as to take into consideration the mechanical load to which the tractor is subjected, namely in order to obtain a wide adjustment dynamic and, hence, a soft and progressive engagement of the clutch, even with a sudden pressing or a quick release of the accelerator pedal;
- assisting operators in the engagement of the clutch and/or of the brakes so as to carry out a soft and progressive engagement of the clutch in a wide range of gear ratios, even with a quick pressing or release of the accelerator pedal;
- assisting operators during braking so as to carry out a soft and progressive slowing down and/or anyway in compliance with the intentions of the driver and/or with the state of the tractor-environment system in a wide range of loads applied to the tractor and slopes, even with a quick release of the accelerator pedal;
- assisting operators while trying to precisely approach products, for example when the tractor is used in forklift mode in order to load or unload goods;
- allowing the automatic clutch and/or brake engagement system to be controlled with an engine drive device also in a remote manner and/or through an automatic driving system and/or another control device integrated in the tractor or equivalent engine drive systems possibly connected to the control unit 14;
- allowing the clutch to be manually controlled so that operators can act simultaneously and with priority relative to the automatic command carried out by the accelerator pedal and/or by an equivalent engine drive command, so that drivers can step in at any time in order to change the torque transmitted to the transmission of the tractor.
The manual command can also be operated in a remote manner and/or through an automatic driving system of the tractor and/or through another control device installed in the tractor.

According to these objects, the Applicant implemented an innovative method for automatically controlling the clutch and the brakes through a logic control system, which takes into account one or more subjective variables/parameters and one or more objective variables/parameters. The subjective variables/parameters are those that can be controlled or set by operators or drivers, whereas the objective ones are defined by one or more sensors installed in the tractor. Hereinafter are some examples of subjective and objective variables/parameters, which, though, do not exhaust all possible choices, which can possibly be much wider. The main subjective variable/parameter is the position of the accelerator pedal of the engine and/or the actuation speed of the accelerator pedal of the engine and/or the acceleration of the accelerator pedal of the engine, which is controlled by operators by pressing or releasing the pedal.

The subjective variables/parameters actuation speed of the pedal and/or actuation acceleration of the accelerator pedal of the engine can contribute, with control rules, to the calculation of P=P(t), namely, of the pressure exerted upon the discs of the clutch.

The movement of the accelerator pedal (meaning a vector having, as components, the position of the accelerator pedal of the engine, the actuation speed of the accelerator pedal of the engine, the acceleration of the accelerator pedal of the engine) is used, together with the state defined by the objective parameters, to interpret the intentions of the driver and activate suitable rules to manage the acceleration of the tractor and/or the position of the tractor and/or the braking of the tractor.

Anyway, it is also possible to interpret the intentions of the driver through the component vector defined as engine vector (number of revolution of the engine, speed of change of the number of revolutions of the engine, acceleration of the number of revolutions of the engine).

Indeed, the clutch and/or the brake can also be controlled through the effects produced by the pressing of the accelerator pedal on the engine and, hence, through the measure of one and/or more components of the engine vector.

The objective variables/parameters help define the state of the tractor-environment system. The objective variables/parameters are aimed at establishing a correlation between the subjective parameter set by the user and the work parameters of the tractor and of the surrounding environment where the tractor is operating. Basically, the objective variables/parameters help determine the state of the tractor-environment and, hence, the rules that are selected. Since the important thing in the use of the accelerator pedal is defining the torque transmitted during the engagement of the clutch and/or when the clutch is closed, the Applicant decided to provide a system that allows a proper torque to be transmitted through the reading of the position of the accelerator pedal of the engine and/or of the speed of the accelerator pedal and/or of the acceleration of the accelerator pedal of the engine and/or of the number of revolutions of the engine and/or of the speed of change of the number of revolutions of the engine and/or of the acceleration of the number of revolutions of the engine, but with the peculiarity that the way in which it changes the pressure of the clutch discs (and, hence, the torque transmitted or the general actuation of the clutch) is not exclusively determined by the driver of the vehicle. The acceleration value established based on the position of the accelerator pedal and/or on the speed of the accelerator pedal and/or on the acceleration of the accelerator pedal is reached by applying one or more rules and based on one or more subjective or objective variables/parameters. Also the distance/time travelled/elapsed from the moment in which the accelerator pedal is pressed/released and/or the number of revolutions of the engine changes and/or one and/or more components of the engine vector defined above can possibly be determined by the way in which the accelerator pedal is pressed/released and/or by the way in which one and/or more components of the engine vector change.

The rules are used to adapt the system both to the intentions of the driver and to the assembly consisting of the tractor and the environment surrounding the tractor.

Naturally, it is also possible to select suitable rules to adapt the braking to the intentions of the driver and/or to the system consisting of tractor-environment.

A proper feedback system takes into consideration the acceleration/deceleration and/or the position and/or the speed of the tractor as well as the subjective and objective variables/parameters, then the most suitable rules are used. By so doing, the control unit is capable of producing a response signal to be delivered to the actuator of the clutch and/or brake.

Basically, the tractor control system can be configured in such a way that the movement of the pedal can produce a constant and/or time-depending acceleration of the tractor, which, though, is independent of the mechanical load to which the tractor is subjected and is predetermined by a subjective variable/parameter that can be set with a graduated scale and/or a suitable knob and/or a sensor, for example capable of measuring the distance of the tractor form a target and/or obstacle; and/or in such a way that the movement of the pedal can produce a controlled acceleration, which is independent of the mechanical load to which the tractor is subjected, but depends on the position of the pedal and/or on at least one of the components of the engine vector, so that a light pressing and/or a small change in one and/or more components of the engine vector or for a small amount of time determines a small controlled acceleration, while a greater pressing and/or a greater change in one and/or more components of the engine vector and/or for a greater amount of time sets, in the control system, a greater acceleration reference; and/or in such a way that the movement of the pedal produces a controlled movement of the tractor, a small movement which can be determined by the position of the lightly pressed pedal, whereas a greater pressing, which determines a greater angular position, produces a greater controlled acceleration, as described above, and the continuous movement of the tractor.

Therefore, a configurator can be implemented, which is capable of implementing the most suitable operating mode, which will be used to interpret the intentions of the driver. The cases discussed herein do not exhaust all possible cases that anyway pertain to the invention.

The definition of small-medium-great pressing and/or speed of the accelerator pedal and/or acceleration of the accelerator pedal is represented and managed by the expert system, which produces an acceleration and/or deceleration and a movement of the tractor by applying the suitable rules selected/applied based on objective variables/parameters.

Therefore, the invention offers a configurable system, which interprets the movement of the accelerator pedal and/or the change in one and/or more components of the engine vector through a language that can be defined as gestural.

A "gesture" can be defined as a trajectory in the space represented by the position of the accelerator pedal and/or by the speed of the accelerator pedal and/or by the acceleration of the accelerator pedal of the tractor and/or in the space represented by the number of revolutions of the engine and/or by the speed of change of the number of revolution of the engine and/or by the acceleration of the number of revolutions of the engine; namely, the curve consisting of the set of points (position of the accelerator pedal at the time t, speed of the accelerator pedal at the time t, acceleration of the pedal at the time t t∈[0,t1], wherein the time variable t belongs to the time interval relating to the pedal control operations.

Therefore, the curve (*θ*(t) , *θ̇*(t) , *θ̇*(t)) represents (the position of the pedal being conceived, in this case, by way of example, as angular position and, hence, angular speed and angular acceleration), as time changes, as a curve, namely a trajectory that the control system is capable of interpreting together with the objective variables acquired with the sensors.

A similar curve can be defined for the points corresponding to the engine vector at the time t: engine vector (t).

In automatic transmissions, the way in which the dynamic of the vehicle is defined currently depends on the sole ability of the operator to operate the accelerator pedal.

The operator presses or releases the accelerator pedal based on the perceived state of the tractor or of the surrounding environment. In order to make up for possible errors of the driver, avoid dangerous manoeuvres and allow the tractor to be manoeuvred (starting uphill and/or automatic direction reversal and/or precision approaching) without stressing the mechanical components, the Applicant created a system that changes the point of view, since the position of the accelerator pedal and/or the speed and/or acceleration with which it moves and/or the engine vector are used only as one of a plurality of variables/parameters for the automatic control of the clutch and/or of the brakes, which determine the timely development of the clutch/brake control until reaching (if possible) of the theoretical value provided for by the current/final position of the accelerator pedal and by the speed and acceleration with which it moved. Objective variables/parameters playing a role in the control are, for example, acceleration and slope and these physical quantities are measured through a sensor, preferably an inertial acceleration sensor and/or an inertial acceleration-gyroscopic sensor, which is installed on the chassis of the tractor, preferably close to the driver's seat, so as to have a better feedback of the actual feelings of the driver.

The position and/or speed and/or acceleration of the accelerator pedal (and/or of an equivalent command) help define the acceleration of the tractor during the engagement of the clutch and, therefore, the value of the pressure of the clutch discs, but the achievement of this value over time is obtained through a set of rules implemented in a suitable logic obtained with mechanical, electromechanical-electronic systems. The rules are activated if the position of the accelerator pedal changes and/or one and/or more components of the engine vector change and/or the state defining the tractor-environment system changes. The state of the system is defined with the help of objective variables/parameters, such as the speed of the tractor and/or the number of revolutions of the engine and/or the number of revolutions of the driven discs of the clutch and/or the acceleration of the vehicle and/or the slope of the path and/or the distance travelled from the moment in which the accelerator pedal starts being pressed and/or the speed of rotation of the tractor around an axis of the tractor itself.

Obviously, the speed of change and/or the acceleration of the physical quantities corresponding to the subjective and/or objective variables can also help define the state of the tractor and/or of the environment where the tractor is moving.

The state of the tractor and of the environment where the tractor is moving, together with the subjective variables/parameters of the control system, produce the activation and the execution of proper rules and functions that exert the most suitable control action upon the tractor in order to offer those functionalities or driving modes that would be carried out by an expert driver. Furthermore, the rules can also be built based on the speed with which operators move the accelerator pedal and/or on the acceleration with which the accelerator pedal of the engine is moved and/or on the measure of the engine vector and, hence, on their driving style or, better said, on their intentions, which obviously depend on the particular work they are doing.
When the rules are activated following the movement of the pedal, the system evolves causing the pressure of the discs of the clutch to get from the initial value P0, which, if necessary, can coincide with the kissing point or with another pressure value, up to the theoretical value established by the rules activated and/or by the position of a selector and/or knob and/or sensor to measure the distance of the tractor from a target and/or obstacle. Thanks to this innovative method, the clutch and/or the brakes can be engaged/released by pressing/releasing the accelerator pedal even immediately and completely, with the tractor standing completely still or moving, without having a violent response from the tractor itself and/or producing a sudden change in the engine vector. Furthermore, the engine is prevented from turning off in case of quick pressing/release of the accelerator pedal. Said system adapts to the mechanical load applied to the transmission axle of the tractor, so as to obtain a pedal adjustment dynamic that is always ideal. Said system adapts to the gear ratio engaged through the gearbox, so as to obtain a pedal adjustment dynamic that is always ideal.
To sum up, the invention also offers the possibility of interpreting the way in which the accelerator pedal is pressed and/or the engine vector changes in order to produce the most suitable starting/stopping mode: small and precise approaching operations or quick starting operations, in any case there is a control of the acceleration and/deceleration during the engagement of the clutch and/or of the brake.
Basically, by so doing, the intention is that of distinguishing a strong starting from a simple approaching of a target.
The expert system implemented inside the electronic control unit allows the rules to be applied taking into account one or more subjective variables/parameters and one or more objective variable/parameters.
It should be pointed out that the implementation of these techniques allows manufacturers to produce position and acceleration control system for tractors simply provided with a clutch transmission, hence very efficient from an energetic point of view, much more efficient than hydrostatic tractors, which use oil under pressure to produce movement (aimed at carrying out small and precise approaching operations), and than hybrid systems, for example with heat engine-electric generator-electric motor. In order to obtain the desired performances, instead of using a particular technology to the detriment of energetic efficiency (and environmental pollution), the invention suggests using expert systems, which control traditional mechanics through rules that could be actuated by an extremely experienced driver, who takes into account the state of the tractor and of the environment where the vehicle is operating. Actually, these rules are handled by the electronic control unit by means of what is normally known as artificial intelligence: instead of using a particular hydraulic and/or electromechanical technology (which negatively affects both consumptions and the environment), a high-efficiency mechanical system (clutch) is used, which is managed by means of rules that make it impossible for users to distinguish the effects produced by the automatic intelligent system from the ones of an expert driver.

Indeed, the expert system obtained by means of rules implemented in the control unit is capable of interpreting the driving intentions of the driver and, hence, for example, provides and adapts the management of the clutch so as to make small movements needed by the tractor to approach the selected target.

Obviously, inertial acceleration-acceleration/gyroscopic sensors are used to measure the acceleration resulting from all the stresses to which the tractor and the driver of the tractor are subjected, said stresses being produced by the environment where the tractor is operating and by the tractor itself.

From the structural point of view, a tractor capable of implementing the innovative clutch control described above is a tractor comprising:
- a chassis;
- an engine
- a cabin, which can be open or closed and is preferably provided with a seat, a driving wheel and engine control means (for example, an accelerator pedal);
- a front axle provided with a pair of front wheels;
- a rear axle provided with a pair of rear wheels, preferably having the same size as the front ones, or with rear tracks, preferably having the same height as the front wheels;
- a braking system;
- a clutch assembly preferably comprising a series of driving discs, a series of driven discs and means to apply pressure onto the discs;
- a manual or automatic selector to selectively engage the forward and reverse gears; and
- a control unit communicating, on one side, with at least one sensor to measure physical quantities, such as the position of the accelerator pedal (subjective variable/parameter set by the driver), number of revolutions of the engine, acceleration, speed, slope of the ground, etc. (objective variables/parameters measured by sensors), and, on the other side, with the clutch control means.

All the aforesaid elements listed above belong the prior art concerning the technical field of agricultural tractors and, as such, do not require any further explanation. Anyway, in order to differentiate tractors from other vehicles, such as for example cars, the tractors according to the invention are of the type comprising a tow hitch and/or a power take-off for agricultural equipment, even of the motor-driven type.

Specifically, the control unit of the tractor according to the invention is configured to carry out an innovative method for controlling the clutch and/or the braking system. In particular, the clutch is controlled by the control unit according to at least one "objective" operating variable/parameter of the tractor, which is measured by a suitable sensor, and according to at least another "subjective" control variable/parameter, which is set by the driver, namely - for example - the position of the accelerator pedal and/or the speed of the accelerator pedal and/or the acceleration of the accelerator pedal of the tractor and/or the engine vector.

Hereinafter the sole accelerator pedal will be discussed as example of engine command, however the same command could also be operated by means of a lever, a knob or other devices that can be controlled by the driver and are located on the tractor and/or in a remote position, hence through a remote control, and/or a by means of a suitable system operating an automatic driving command for the tractor and/or by means of another control device integrated in the tractor and/or through sensors that detect the state of the tractor and the environment where the tractor is operating, for example the distance travelled from the moment in which the accelerator pedal is slightly pressed/released and/or one and/or more components of the engine vector changes or the distance of the tractor from a target and/or obstacle. According to a preferred embodiment of the invention, the "objective" operating variable/parameter of the tractor can be the forward speed and/or the acceleration and/or the number of revolutions of the engine and/or the total mass and/or the slope of the ground and/or the gear ratio and/or the distance from a target located around the tractor and/or the distance travelled by the tractor from the moment in which the accelerator pedal starts being pressed or the pedal is released and/or one and/or components of the engine vector changed. The "subjective" variable/parameter set by the driver, on the other hand, can be, for example, the angular position of the accelerator pedal and/or the speed of the movement of the accelerator pedal and/or the acceleration of the movement of the accelerator pedal and/or the engine vector.

Hence the control unit controls the clutch in an automatic manner (for example, while staring or during a movement reversal) based on the aforesaid parameters (an objective one and a subjective one).

The control unit uses the subjective parameters and the objective parameters, which help define the state and the rules to be applied, and, finally, the control unit produces an output signal to control the actuators of the clutch and/or of the brake.

During the clutch engagement phases, the acceleration is preferably controlled by means of an inertial acceleration sensor/inertial acceleration-gyroscopic sensor, which allows the system to measure the sum of all the stresses to which the tractor and, hence, the driver are subjected. Advantageously, the application of suitable control rules and, preferably, the use of a suitable inertial sensor ensure that the engagement of the clutch is carried out in such a way that the engagement is ideal even in case users move the accelerator pedal in an inappropriate manner. Therefore, even in case users accidentally and suddenly pressed/released the accelerator pedal, the tractor would not subjected to jolts, the complete engagement of the clutch and/or the braking and, hence, the stopping would anyway be reached in a soft manner and the tractor would be prevented from turning off.

Preferably, the objective operating variable/parameter of the tractor is not measured only upon activation of the accelerator, but is measured and processed by the control unit continuously during the entire clutch engagement operation.

Advantageously, in this case, the control unit is capable of "absorbing" possible sudden changes in the state of the tractor, for example a sudden change in the slope of ground, ensuring a result even in these cases.

The sensor measuring the objective operating variable/parameter of the tractor can be an inertial acceleration sensor and/or an inertial acceleration/gyroscopic sensor installed on the chassis, in particular on the body or on the dashboard, so as to intercept possible dynamic variations extremely quickly before the variation is entirely transmitted to the axle.

The fact that an inertial acceleration sensor and/or an inertial acceleration/gyroscopic sensor can be used is not a given, but implies a study of the system aimed at pointing out the fact that a traditional acceleration sensor located, as usual, on the gears of the transmission of the tractor would not able to quickly measure even the smallest, but meaningful stresses coming from the environment where the tractor is operating, but it would only be capable of measuring the effect produced by the drive force of the tractor.
Basically, with conventional acceleration sensors reading the movement of the gears of the transmission of the tractor, the acceleration is measured with a smaller sensitivity and with delay relative to inertial sensors. Traditional sensors, also because of the place where they are installed, are scarcely sensitive to the stresses produced by the environment in which the tractor is operating, whereas inertial sensors installed on the chassis of the tractor can replicate the driving feelings felt by an expert driver when he/she has to carry out clutch or brake engagement and disengagement operations using manual controls and, hence, needs to act promptly and with a great sensitivity.
Furthermore, the sampling frequency of the inertial sensor is independent of the speed of the tractor.

Advantageously, inertial acceleration sensors and inertial acceleration-gyroscopic sensors have the advantage of not being dependant on the sampling of the speed of the tractor.

It should be pointed out that the control system implemented herein differs from systems only using PID (proportional, integral, derivative) control systems. Indeed, the sole use of these PID systems is not enough to interpret the intentions of the driver. Basically, traditional PID systems do not implement a knowledge base that is effective in order to operate in an optimal manner in the presence of non-linear systems and with a strong subjective component due to the human factor represented by the driver.

Furthermore, generally speaking, PID systems are designed so as to optimize the response of the system, namely so as to minimize the time needed to reach the setpoint set by means of the position of the clutch pedal. Therefore, a pure PID system does not take into account the ability or lack of ability of the operator using the accelerator pedal, since it would simply reach, in the shortest time and with the smallest "overshoot", the pressing and/or torque reference set by means of the accelerator pedal. Basically, if the accelerator pedal were operated very quickly or completely released all of a sudden, there would be a violent engagement of the clutch and, hence, an unpleasant or even violent and dangerous starting or re-staring after a reversal of movement.

Through the use of the accelerator pedal, the implemented system recognizes the driving intentions of the driver and, then, the most suitable control rules are activated depending on the surrounding conditions represented by the environment where the agricultural vehicle is operating.

Said control rules can take into account all past actuations of the clutch and/or of the brakes of a given tractor so as to customize the operation also depending on the driving style of a single user.

Furthermore, the tractor according to the invention comprises, if necessary, a command and/or more than one command to set a second and/or more subjective control parameters than can be set by the driver, said second and/or more parameters being, for example, adjustable along the graduated scale and setting the stopping distance between the tractor and the target or obstacle.

In order to set the automatic reversal, the tractor is provided with a suitable command for the activation of the start and stop mode and of the automatic reversal of the movement direction, wherein, during the automatic reversal, the control unit is configured to control the clutch as described above. Furthermore, the tractor is provided with a reversal management command to selectively request that the reversal of the movement occurs with a zero or non-zero driving torque.

Therefore, to sum up, the invention relates to an "automatic" tractor (copying, in this sense, a similar definition used in the automotive industry) and to a method to operate the tractor, namely to a logic controlling the engagement of the clutch and/or of the brakes based on the position of the accelerator pedal and/or on the engine vector and based on at least one physical operating variable/parameter measured by at least one suitable sensor.

### Brief description of the drawings

Further features and advantages of the invention will be best understood upon perusal of the following description of a non-limiting embodiment thereof, with reference to the accompanying drawings, wherein:
- figure 1 is a schematic side view of a first preferred example of tractor, which can be provided with a control unit according to the invention;
- figure 2 is a schematic side view of a second preferred example of tractor, which can be provided with a control unit according to the invention;

- figures 3 an 4 are schematic views of a disc clutch and of an operating pedal for said clutch, respectively;
- figure 5 is a schematic view of the components of the system which can be installed in the tractors of figures 1 and 2 and help, in an automatic and controlled manner, carry out the automatic engagement of the clutch according to the invention.

### Description of an embodiment of the invention

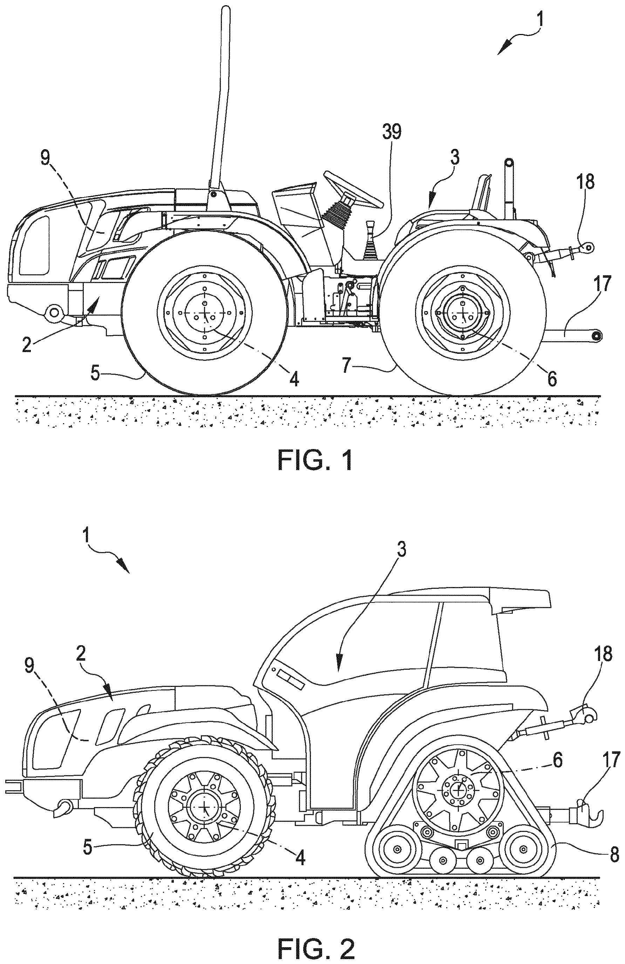

Now, reference will be made to figures 1-5 in order to describe at least one embodiment of the invention in a detailed manner.

Figure 1 shows a schematic side view of a first preferred example of isodiametric tractor 1, which can carry out the engagement of the clutch according to the invention. The term isodiametric indicates that the rear wheels have the same diameter as the front wheels. The specification of this type of tractor is functional to the invention, which, as a matter of fact, finds a greater executive advantage in those tractors where, due to space problems, known electric-hydraulic solutions, which involve two clutches, cannot be implemented. However, the invention also relates to non-isodiametric tractors with small sizes and to traditional large-sized tractors as well as to dual-clutch tractors.

In particular, the tractor of figure 1 comprises a chassis 2, a front axle 4 provided with front wheels 5 and a rear axle 6 provided with rear wheels 7. Inside the chassis 2 there is an engine 9, which is connected in a known manner at least to the rear axle 6. The tractor 1 of figure 1 comprises an open cabin 3 where there are a steering wheel, a gear stick 39 and clutch operating controls, for example a pedal according to the prior art.

For the purposes of the invention, no further detailed description of the components of the tractor 1 belonging to the state of the art will be given. It should only be pointed out that a tractor cannot simply be interpreted as a passenger-carrying vehicles and, hence, cannot be compared to cars or the like, due to its particular conformation and function. By mere way of example, as discriminating and specific element of tractors, figure 1 shows a rear tow hitch 17 for the coupling to a towed equipment and a third point 18, which serves as hydraulically operated hitch to couple and move (lift/lower) an agricultural equipment. The tractor 1 of figure 1 further comprises a rear power take-off (not shown) for the coupling to a motor-driven agricultural equipment.

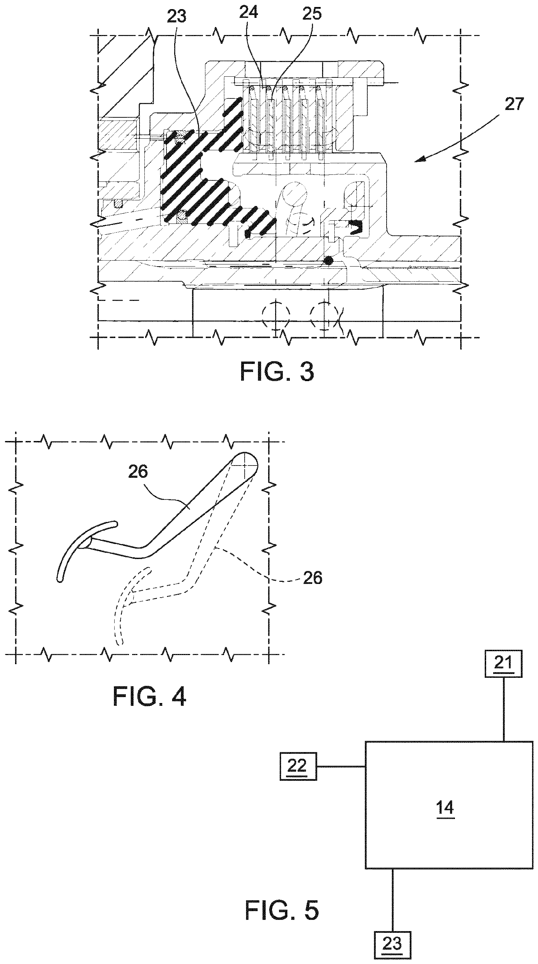

The example of figure 5 will show how the accelerator pedal helps control the engagement of the clutch.

Figure 2 shows a schematic side view of a second preferred example of track tractor 1, which can carry out the engagement of the clutch the optimal reversal of the direction of movement according to the invention.

In particular, the tractor 1 of figure 2 differs from the tractor 1 of figure 1 only in some details, among which the greatest ones are the presence of rear tracks 8 instead of the rear wheels 7 and the presence of a closed cabin 3 for safety reasons.

The rest of the structure of the tractor 1 of figure 2 is completely similar to the tractor 1 of figure 1. As a matter of fact, even though the tractor 1 of figure 2 cannot be defined "isodiametric" because of the lack of rear wheels, the rear track 8 has a vertical size that is substantially the same as the one of the front wheels 5, with the consequence that this tractor also is a small-sized tractor that can hardly be provided with known electric-hydraulic devices with two clutches that are function to the starting and to the reversal of the movement direction of the tractor.

Figure 5 shows a schematic view of the components integrated in the tractors 1 of figures 1 and 2, which help control the engagement of the clutch in a coordinated manner.

The central element of figure 5 is the control unit 14. The control unit is connected to the accelerator pedal (shown in a possible example in figure 4) in order to receive and interpret the signal that is a function of the desire of the driver, namely the pressure to be exerted upon the discs in order to carry out the engagement of the clutch and, hence, the desired mechanical torque to be transmitted to the transmission axle connected to the wheels (for example, in order to start or reverse the movement direction when the tractor is standing still).

Once the accelerator pedal has been operated and/or the engine vector has been measured, the control unit automatically controls a series of mechanical components, among which there can be the devices used to apply pressure to the discs of the clutch and the brakes.

Furthermore, the clutch pedal can be operated simultaneously with and with priority relative to the automatic clutch engagement system so as to change the torque transmitted to the transmission of the tractor.

The manual command obtained through the clutch pedal can also be actuated in a remote manner and/or through other control devices integrated in the tractor.

The way in which the devices used to apply pressure to the discs are controlled will be explained more clearly below.

In figure 5, references 21 and 22 schematically indicate two inputs based on which the control unit 14 orders the engagement of the clutch, in particular of the pusher 23 of the clutch configured to apply pressure to the pack of discs 24 and 25. In order to offer a more complete look, figures 3 and 4 show an example of a clutch 27 and of a relative accelerator pedal 26, respectively. Since these elements are known to a person skilled in the art in a detailed manner, the invention does not describe components of these devices besides the ones involved in the innovative control.

In particular, the input schematically indicated with reference 22 corresponds to at least one objective operating variable/parameter of the tractor 1, which is continuously measured by a suitable sensor. For example, the variable/parameter can be the development of the engine vector over time, the development of the speed of the tractor 1 over time, the total mass and/or the acceleration of the tractor and/or the angular speed and/or angular acceleration of rotation around one or more axes of the tractor and/or the distance of the tractor from a target and/or obstacle and/or the distance travelled by the tractor from the moment in which the accelerator pedal starts being pressed and/or the slope of the ground. On the other hand, the input schematically indicated with reference 21 corresponds to at least one subjective control variable/parameter set by the driver, such as the position of the accelerator pedal 26 (figure 4 shows the pedal at the beginning and at the end of the travel) and/or the engine vector and/or the stopping distance of the tractor from a target. Obviously, the speed and/or acceleration of movement of the clutch pedal and/or the engine vector also help define the voluntary or involuntary, bad, good or optimal manner in which the driver controls the drive of the tractor.

Obviously, the measure of the engine vector can also help define the voluntary or involuntary, bad, good or optimal manner in which the driver controls the drive of the tractor.

On the other hand, reference 23 indicates at least one output to control the actuator controlling the clutch (and/or the brake), for example the pusher of the discs 23 of figure 3.

As widely explained in the previous chapter of the invention ("description of the invention"), it is clear that the only action drivers have to perform in order to carry out an effective and soft engagement of the clutch when starting (uphill or not) or reversing the movement is that of pressing by acting upon the accelerator pedal 26, the way in which it is pressed is interpreted by suitable logics controlled by the control unit 14 based on at least one subjective variable/parameter 22 (for example, position and/or speed and/or acceleration of the movement of the accelerator pedal of the engine and/or of engine vector) and on at least one objective variable/parameter 21 measured by a suitable sensor.

Finally, it is clear that the invention described herein can be subjected to changes and variations, without for this reason going beyond the scope of protection of the appended claims.

## Claims

1. A tractor (1) comprising a chassis (2), a cabin (3) or a driving position for a driver, a front axle (4) provided with a pair of front wheels (5), a rear axle (6) provided with a pair of rear wheels (7) or rear tracks (8), an engine (9), at least one clutch device, a braking system and a selector (39) for the selective engagement of the forward gears and reverse gears or an automatic gear shifting system, an engine drive device (26) that can be set by the user along a scale, a control unit (14) configured to automatically control the clutch device and/or the braking system according to a first subjective variable/parameter set by the driver and according to at least one objective operating variable/parameter of the tractor; wherein the first subjective variable/parameter is a parameter depending on the actuation of the engine drive device (26) and the objective variable/parameter is a physical operating parameter of the tractor (21) continuously measured by a sensor.

2. Tractor (1) as claimed in claim 1, wherein the engine drive device (26) is an accelerator pedal and/or another control member, even a remote one, and hence, for example, a remote control and/or another control system integrated in the tractor and/or an automatic tractor driving system; the subjective variable/parameter being the position of the pedal and/or the pedal actuation speed and/or acceleration and/or the number of revolutions of the engine and/or the speed of change of the number of revolutions of the engine and/or the acceleration of the number of revolutions of the engine.

3. Tractor (1) as claimed in claim 1 or 2, wherein the sensor is configured to measure the forward speed of the tractor and/or the acceleration of the tractor and/or the angular rotation speed and/or the angular rotation acceleration of the tractor around one or more axes of the tractor and/or the forward or reverse direction of the tractor and/or the acceleration and/or the total mass and/or the slope of the ground and/or the gear ratio of the tractor and/or the number of revolutions of the tractor engine and/or the distance of the tractor from a target and/or obstacle and/or the distance travelled by the tractor from the moment in which the accelerator pedal strats bein ressed and/or released, or an equivalent control member operating the engine, starting from the position that corresponds to a given number of engine revolutions and/or another control system integrated in the tractor and/or an automatic tractor driving system.

4. Tractor (1) as claimed in any one of the preceding claims, wherein the sensor is installed on the chassis (2).

5. Tractor (1) as claimed in any one of the preceding claims, wherein the sensor is an inertial sensor.

6. Tractor (1) as claimed in claim 4 or 5, wherein the sensor is an inertial acceleration sensor.

7. Tractor (1) as claimed in claim 5 or 6, wherein the sensor is an inertial acceleration and/or an inertial acceleration/gyroscopic sensor.

8. Tractor (1) as claimed in any of the preceding claims, wherein the control unit (14) is configured to automatically control the clutch device and/or the braking system according to a second subjective variable/parameter set by the driver, said second variable/parameter being adjustable along a graduated scale as a function of the stopping distance of the tractor from a target and/or a transitory obstacle required to reach the target value set by the position of the motor engine device (26).

9. Tractor (1) as claimed in any of the preceding claims, wherein the tractor is provided with a command for activating the automatic reversal of the direction of motion; during the automatic reversal, the control unit being configured to control the clutch as claimed in any of the previous claims.

10. Tractor (1) as claimed in claim 9, wherein the tractor is provided with a command to selectively manage the reversal in order to request that the reversal of the movement occurs with zero or non-zero traction torque.

11. Method for automatically controlling the clutch of a tractor; the method comprising the steps of:
a) providing a tractor (1) as claimed in any of the preceding claims;
b) automatically controlling the clutch and/or the braking system by means of the control unit during the motion reversal or starting or cruising phases;
wherein
the step of automatically controlling the clutch by means of the control unit (14) is carried out according to at least one subjective variable/parameter set by the driver and according to at least one objective operating variable/parameter of the tractor; wherein the first subjective variable/parameter is the position of the engine drive device (26) and/or the actuation speed of the engine drive device (26) itself and/or the engine vector and the objective variable/parameter is at least one physical operating parameter of the tractor or of the environment in which the tractor (21) is operating continuously measured by a sensor.

12. Method as claimed in claim 11, wherein the step of measuring by means of at least one sensor and transmitting to the control unit (14) at least one objective operating variable/parameter (21) of the tractor (15) comprises the steps of measuring and transmitting the data concerning the forward speed of the tractor and/or the forward or reverse direction of the tractor and/or the total mass and/or the acceleration of the tractor and/or the angular rotation speed and/or the angular rotation acceleration around one or more axes of the tractor and/or the slope of the ground and/or the gear ratio and/or the number of revolutions of the tractor and/or the distance of the tractor from a target and/or obstacle and/or the distance travelled by the tractor from the moment in which the driver starts pressing/releasing the accelerator pedal.

13. Method as claimed in claim 11 or 12, wherein the sensor is installed on the chassis (2) and wherein the sensor is an inertial acceleration sensor and/or an inertial acceleration-gyroscopic sensor.

14. Method as claimed in any one of claims 11 to 13, wherein the step of measuring at least one operating variable/parameter of the tractor (15) by means of at least one sensor and transmitting the data to the control unit (14) are carried out continuously at least for the entire duration of the clutch engagement process.

15. Method as claimed in any one of claims 11 to 14, wherein the clutch and/or the braking system is operated according to both the position of the accelerator pedal of the engine and/or the actuation speed of the accelerator pedal of the engine and/or the acceleration of the accelerator pedal of the engine and/or the engine vector so as to interpret the intentions of the driver through a gestural language expressed with the accelerator pedal and/or with an equivalent engine operating command.

16. Method as claimed in any one of claims 11 to 15, wherein the clutch is operated according to a pre-selection made by means of a suitable knob along a graduated scale and/or according to the distance of the tractor from a target or obstacle and/or by means of another control member, even a remote one, and hence, for example, a remote control and/or an automatic driving system of the tractor and/or another control device installed in the tractor.

17. Method as claimed in any one of claims 11 to 16, wherein the clutch is operated so as to produce a constant and/or time-depending controlled acceleration until the clutch is closed.

18. Method as claimed in any of claims 11 to 17, wherein the braking system is operated in order to produce controlled deceleration.

19. Method as claimed in any one of claims 1 to 18, wherein it is possible to configure the interpretation mode of the way the accelerator pedal moves, thus properly acting upon the clutch and/or the brakes.

20. Method as claimed in any one of the preceding claims, wherein the manual command of the clutch can act simultaneously and with priority relative to the automatic command carried out by the accelerator pedal and/or relative to an equivalent command, so as to change the torque transmitted to the transmission of the tractor, the manual command can also be operated in a remote manner by means of a remote control and/or through an automatic driving system of the tractor and/or another control device integrated in the tractor.
